# EUROPEAN PATENT SPECIFICATION

(11) **EP 3 328 135 B1**
(45) Date of publication and mention of the grant of the patent: **11.11.2020**
(21) Application number: 16201113.4
(22) Date of filing: 29.11.2016
(51) Int. Cl.: H04W 60/00, H04W 12/00, H04W 48/18, H04W 48/10, H04W 8/18, H04W 8/20, H04W 88/06, H04W 68/12

(54) **SIMULTANEOUS OPERATOR DOMAIN ATTACHMENT OF A COMMUNICATION TERMINAL**
GLEICHZEITIGER OPERATORDOMÄNENANHÄNGUNG EINES KOMMUNIKATIONSENDGERÄTS
FIXATION DE DOMAINE D'OPÉRATEUR SIMULTANÉE D'UN TERMINAL DE COMMUNICATION

(43) Date of publication of application: 30.05.2018
(73) Proprietor: Swisscom AG, 3050 Bern (CH)
(72) Inventor: Jost, Frank-Peter, 3052 Zollikofen (CH); Wagner, Christof, 3072 Ostermundigen (CH)
(74) Representative: Vesterinen, Jussi Tapio

(56) References cited:
- EP-A1- 2 469 898
- EP-A1- 2 869 602
- EP-A2- 2 608 611
- WO-A1-2012/139623
- WO-A1-2015/180140
- US-A1- 2012 289 193
- US-A1- 2013 303 203
- US-A1- 2013 329 639
- US-A1- 2014 228 071
- US-A1- 2015 327 159

## Description

### TECHNICAL FIELD

The present invention relates to a method of operating a communication terminal in a communication network. More specifically, according to the proposed method, a communication terminal is simultaneously attached to more than one operator domain. The invention also relates to a communication terminal for carrying out the method.

### BACKGROUND OF THE INVENTION

Currently known mobile phones or terminals (sometimes also referred to as user equipment (UE)) supporting, amongst others, 3rd (3G) generation partnership project (3GPP) compliant access technologies can access a single radio access network (RAN), network and service domain at a time. In order to access a radio network, user terminals need an identity module, such as a universal integrated circuit card (UICC). The UICC identifies the user of a terminal to a wireless network operator so that the operator knows the user's plan and services. The UICC can store user's contacts for example, and enables a secure and reliable voice and multimedia data connection, and global roaming. The UICC is the universal application delivery platform that works with any 3G or 4G device. Technically, the UICC is a smart card and works in all mobile telecommunication networks. The UICC comprises a computer or microprocessor and its own data storage and software. It is an evolution of the subscriber identity module (SIM) used to identify subscribers in global system for mobile communications (GSM) networks.

A major advantage of the UICC over the SIM is the fact that it can have multiple applications on it. One of these, the universal subscriber identity module (USIM) application, is what identifies the user to the wireless service provider using for example one of the following standards: universal mobile telecommunications system (UMTS), high speed packet access (HSPA) or long term evolution (LTE). Other possible applications include internet protocol (IP) multimedia services identity module (ISIM), to secure mobile access to multimedia services, and non-telecom applications such as payment applications. For example, many subscribers may have a UICC with USIM and ISIM applications for phone service and multimedia respectively. A further advancement is that the UICC can communicate using IP, the same standard used on the internet and the new generation of wireless networks.

Currently dual SIM user terminals exist comprising two SIM cards. Devices that use more than two SIM cards have also been developed and released, notably triple SIM terminals, and even handsets that can run on four SIMs. Shortcomings and disadvantages of these multi-SIM approaches are the following:
- Switching between operator domains (mostly used for price sensitive cases to avoid international roaming charges) has to be initiated by the user via a user interface of the user terminal.
- The user terminal needs to be equipped with two or more SIM hardware slots.
- The multi-SIM approaches do not support any kind of network initiated operator domain switching.
- The multi-SIM approaches are limited to only very few selections of prespecified networks/operators.
- Only one SIM can be active at a time unless the terminal has at least partly independent communication hardware sets (including antennas for instance) for the SIMs.

US2013303203 (A1) relates to paging and system information broadcast handling for multi-SIM wireless transmit/receive units (WTRUs) using mobile networks to access resources and/or services. Embodiments also contemplate paging and system information broadcast handling for multi-SIM WTRUs and/or non-SIM WTRUs using mobile networks to access virtualised resources and/or services. Embodiments contemplate that a WTRU may determine to monitor a plurality of mobile networks.

US2013329639 (A1) discloses a solution where a user equipment (UE) may flexibly or dynamically access one or more network operators via one or more SIMs (or virtual SIMs) in the mobile device. Each SIM provides authentication/access to a single network operator, and multiple SIMs will therefore enable multiple network operator accesses. The authentication may be based on one or more physical SIMs and/or virtual SIMs. A connectivity engine in the UE allows for dynamic selection and/or authentication of network operators, e.g., wireless/mobile network operators or carriers, and their corresponding radio access technologies (RATs).

EP2869602 (A1) relates to a radio device for requesting and receiving a radio network service from at least one cellular radio network, comprising a multi-domain monitoring unit, which is configured to determine, while access to a first one of the radio network domains is maintained, first availability information regarding the requested radio network service from the first radio network domain and second availability information regarding the requested radio network service from at least one second radio network domain of the set of radio network domains, and provide at its output, at least upon determination that the first availability information indicates non-availability of the requested radio network service from the first radio network domain, an availability output indicative at least of those second radio network domains with determined current availability of the requested radio network service.

EP2469898 (A1) provides a method for enabling change of a SIM. The method comprises: a SIM selector module supported by an integrated circuit card (ICC) performing SIM selection among multiple SIMs supported by said ICC, based on SIM selection rules stored in said ICC.

WO2015180140 (A1) discloses an apparatus to support SIMs in a wireless accessory device. The wireless accessory device includes a SIM and an interface to interconnect the wireless accessory device to a wireless communication device, where the subscriber identity module provides information to the wireless communication device through the interface to enable the wireless communication device to authenticate with a wireless network using a subscriber identity associated with the subscriber identity module. The SIM is installed on a removable universal integrated circuit card in the wireless accessory device or is an electronic subscriber identity module installed on an embedded universal integrated circuit card permanently affixed to a circuit board in the wireless accessory device.

EP2608611 (A2) discloses a solution directed to communicating in a wireless communications system, including monitoring a communication session on a first network, ignoring pages from a second network during the communication session, the first and second network configured for operation on different physical layers, and upon termination of the communication session over the first network, selectively sending a query to an application server to request information related to failed attempts by the application server to contact the access terminal on the second network during the communication session.

### SUMMARY OF THE INVENTION

It is an object of the present invention to overcome at least some of the problems identified above relating to operating terminals comprising multiple subscriber identity instances in communication networks.

According to a first aspect of the invention, there is provided a method of operating a communication terminal as recited in claim 1.

The proposed new solution has the advantage that the communication terminal can be simultaneously attached to more than one operator domain. However, when the communication terminal is turned on, it camps on only one operator domain at a time, and it is arranged to operate on only one radio frequency at a time for communicating in the communication network. Furthermore, for the communications, the communication terminal comprises only one hardware set, ie one antenna, modulator etc. A new camping procedure can be initiated by the network if a given event takes place in the network, for instance. Thus, the camping procedure can be automatically initiated by the communication network once a given criterion is met. In this manner, the communication terminal can simply follow the instructions received from the communication network. The proposed solution also increases public safety, because thanks to the invention, it is extremely unlikely that the communication terminal would find itself in a situation in which it cannot connect to any operator domain.

According to a second aspect of the invention, there is provided a computer program product arranged to execute the method according to the first aspect of the present invention.

According to a third aspect of the invention, there is provided a communication terminal arranged to carry out the method according to the first aspect of the present invention.

Other aspects of the invention are recited in the dependent claims attached hereto.

### BRIEF DESCRIPTION OF THE DRAWINGS

Other features and advantages of the invention will become apparent from the following description of a non-limiting example embodiment, with reference to the appended drawings, in which:
- Figure 1 is a block diagram illustrating some elements of a communication network according to an example of the present invention;
- Figure 2 is a block diagram illustrating some elements of an overlay operator service domain according to an example of the present invention;
- Figure 3 is a flow chart summarising an initial communication terminal network attachment process according to an example of the present invention;
- Figure 4 is a flow chart summarising an operator domain subscription camping switching procedure according to a first example of the present invention;
- Figure 5 is a flow chart summarising an operator domain subscription camping switching procedure according to a second example of the present invention;
- Figure 6 is a flow chart summarising an incoming call processing flow according to an example of the present invention;
- Figure 7 is a flow chart summarising an outgoing call processing flow according to an example of the present invention; and
- Figure 8 is a flow chart summarising a process of generating a broadcast channel frequency network map according to an example of the present invention.

### DETAILED DESCRIPTION OF AN EMBODIMENT OF THE INVENTION

An embodiment of the present invention will now be described in detail with reference to the attached figures. This non-limiting embodiment is described in the context of a wireless cellular communication network. However, the teachings of the present invention are not limited to this environment. Identical or corresponding functional and structural elements which appear in the different drawings are assigned the same reference numerals.

The embodiment described in more detail below is based on a multiple USIM/ISIM configuration on a single UICC or embedded SIM (eSIM) structure. Unlike a traditional SIM card, which is pre-provisioned with an operator profile, eSIMs are reprogrammable. The profile of a chosen operator can be installed, activated or changed via an encrypted communication over a mobile or fixed network. According to the present invention, it is possible to implement multiple and independent USIMs/ISIMs, ie from a first USIM/ISIM 1 to nth USIM/ISIM, with a single UICC or eSIM. However, it is to be noted that the teachings of the present invention also apply to solutions having traditional SIM cards, ie solutions having one physical SIM slot for every SIM card. Controlled by a UICC algorithm preferably communicating with all the configured USIM/ISIMs, a domain controlling unit, referred to as a network algorithm or first algorithm, which in the described embodiment is on the network domain side, is able to make an appropriate USIM/ISIM to camp on a particular operator domain according to various use cases or scenarios, remotely or via a controlling application (app) installed on the communication terminal. When a terminal camps on a certain operator domain, it is listening (eg periodically) to a broadcast channel (BCH) of that operator or more specifically to its broadcast control channel (BCCH). A BCH is a downlink channel in a communication network that is used by base stations to provide signalling information to the communication terminals. The communication terminals use this information to find a network, synchronise with it and to connect to it.

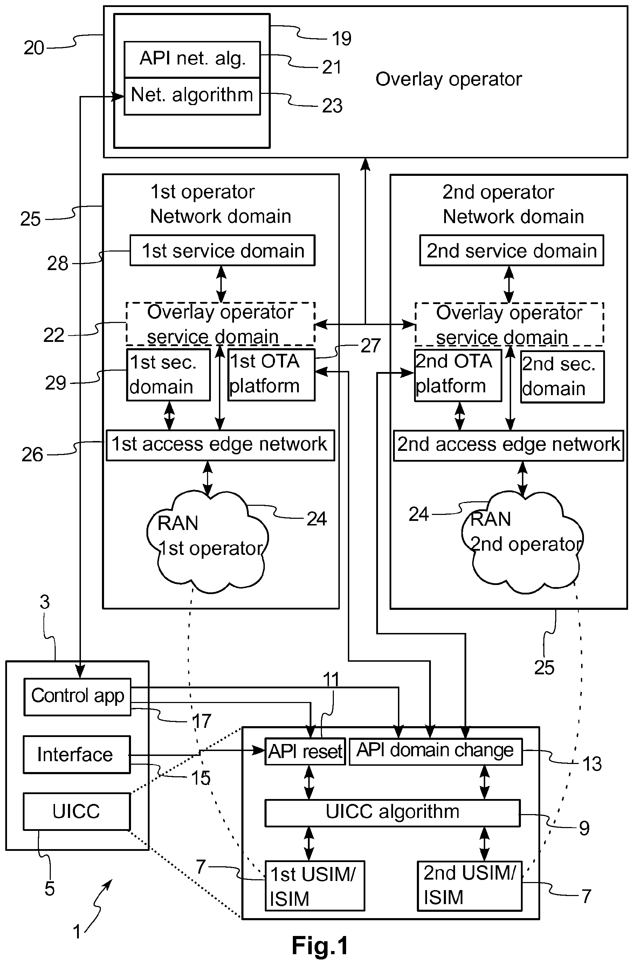

The block diagram of Figure 1 illustrates a wireless communication network 1 in a simplified manner. Only the elements which are useful for understanding the teachings of the present invention are shown. A wireless communication device 3, which in this example is a mobile phone, station or terminal (also known as UE) comprises a single subscriber identity unit 5 (ie only one subscriber identity unit 5 and only one hardware slot for it), which in this example is a UICC. Thus, the mobile phone 3 supports multiple subscriber identities. In the present description, by the subscriber identity unit is understood any kind of subscriber identity module or card (or subscriber identity for short) which somehow identifies the user of the mobile phone and which may have various subscriber identity applications on it. In the present description, a subscriber identity instance is understood to cover both physical subscriber identity units but also subscriber identity applications. The subscriber identity unit may comprise security credentials and/or one or more subscriber keys. Thus, the subscriber identity unit covers UICCs and eSIMs for example. The UICC 5 may comprise multiple USIM and ISIM applications 7 (only two USIM/ISIM pairs are shown in Figure 1) defining (eg by the security credentials and/or subscriber identity information) a user subscription to a specific operator domain of the communication network. In other words, the subscription information is saved on the USIM and/or ISIM. In this example, for every USIM, there is a corresponding ISIM so that they can be considered as a USIM/ISIM pair enabling communications with a specific operator domain. However, instead of having various USIM/ISIM pairs on the UICC, there could be merely USIMs or ISIMs or another kind of combination of them. In this illustrated example there are two USIMs/ISIMs 7 for accessing a first operator domain 25 and a second operator domain 25. According to the present invention, the mobile phone 3 is configured to be attached to more than one operator domain simultaneously by using its USIMs/ISIMs 7. The mobile phones 3 need to register with the network to receive services that require registration. This registration is called network attachment.

The operation of the USIMs/ISIMs can be controlled by a second algorithm 9, referred to here as a UICC or processing algorithm. More specifically, the UICC algorithm is configured to activate/deactivate and optionally reboot or reset the USIMs/ISIMs according to instructions received from a first application programming interface (API) 11, referred to here as an API reset, and/or a second application programming interface 13, referred to here as an API domain change, which in this example also comprises an API OTA SMS (API over-the-air programming short message service). By activating the USIMs/ISIMs, the mobile phone 3 can be attached to a specific operator domain. Furthermore, the API domain change 13 is also arranged to control on which operator domain the mobile phone should be camped at a given time instant. The API reset 11 is configured to reset the UICC to operate in a master or default domain corresponding in this example to a first USIM/ISIM. In other words, the API reset 11 is configured to select and activate the USIM/ISIM associated with the default domain, and optionally to deactivate the other USIM/ISIMs. In this example, the API reset 11 is not configured to activate other USIMs or ISIMs. The API reset 11 is configured to receive instructions from a terminal specific human interface 15, which is part of the mobile phone 3. The mobile phone 3 further comprises a control application 17, referred to as a control app, which is also configured to send instructions to the API reset 11. The control app 17 is also configured to bidirectionally communicate with the API domain change 13 as explained later in more detail.

On the communication network side, there is shown a network processing unit 19, which in this example is located in a third operator domain, referred to as an overlay operator domain 20 (one network processing unit 19 per overlay operator domain). From the services point of view, the overlay operator domain 20 can be considered to be a master domain, while the other operator domains 25 can be considered to be slave domains. The overlay operator domain 20, and more specifically its service domain 22, has control over the slave domains 25 and knows, for instance, on which operator domain the mobile phone 3 is currently camped. According to this example, the network processing unit 19 comprises two elements as shown in Figure 1, namely a third API 21 and the network algorithm 23. The third API 21 is arranged to communicate with the network algorithm 23 and with remaining elements of the overlay operator domain 20.

In this example, the operator domains 25 comprise a radio access network (RAN) 24 (access domain), an access edge network 26 at the edge of the RAN 24, an OTA platform 27, a service network 28, a network domain and a security domain 29 for providing user authentication to the overlay operator service domain 22. In the present description, the network side is understood to comprise all the elements of Figure 1 apart from the mobile phone 3 and the elements included therein. The operation of the network processing unit 19 is controlled by the overlay operator domain 20 and is arranged to send responses received from the UICC algorithm 9 (via its API 21) back to the overlay operator domain 20. In this example, the overlay operator domain 20 has a comprehensive control over the mobile phone 3. According to this example, only the mobile phone 3 itself and the overlay operator domain 20 (or its service domain 22) can decide to initiate the (switching) process to camp the mobile phone 3 on another operator domain 25. To be able to decide to which subscription the mobile phone 3 should be switched (and thereby where the mobile phone should be camped), the overlay operator 20 preferably has knowledge about the network conditions (eg network congestion, malfunction etc) in all the operator domains 25 of the communication network 1. The knowledge about the operational conditions in the different domains can be derived automatically (via eg obtaining the network status from the different domains) or by human intervention (eg after a catastrophic situation, such as earthquake, terror attack etc). In this example, OTA domains of the operator domains 25 each comprise one OTA platform 27, which is configured to bidirectionally communicate with the API OTA SMS of the API domain change 13. The security of the system can be improved, if only a registered and/or previously approved control app 17 and/or the OTA platform 27 is/are able to access the APIs of the UICC 9. Furthermore, if the APIs of the UICC 9 cannot provide feedback on the domain switching process, the control app 17 may be able to poll other APIs of the mobile phone 3 to access the information.

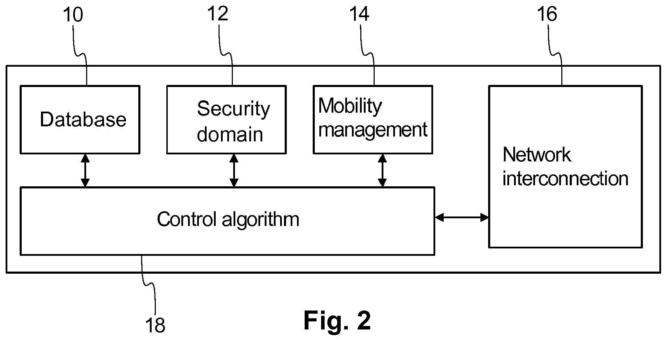

Figure 2 is a block diagram schematically illustrating some of the elements of the overlay operator service domain 22 or overlay access network control domain. The overlay operator service domain 22 comprises a database 10 for storing eg a BCCH frequency map indicating where particular BCCH frequencies are used in the network 1. There is also shown a security domain 12 for providing security credentials so that the end users do not have to authenticate themselves every time they would like to start communicating in the network 1. A mobility management support unit 14 is provided for dealing with the information from the database 10 and for providing the mobile phones 3 with information on which operator domain 25 they should be camped at a given time instant and the frequencies the mobile phones 3 should be listening to. There is further provided a network interconnection unit 16 for handling eg incoming and outgoing calls if a normal call setup sequence needs to be broken up (ie the mobile phone 3 needs to be camped on another operator domain 25 in order to conclude the call). The above entities are interlinked by an overlay operator control algorithm 18.

In the present description, the following terms can be described in the following manner:
- Access domain: this domain comprises the communication network (wireless and/or wired) access infrastructure (eg 2G, 3G, 4G RAN / cables and/or fibres) of a licensed network operator;
- Network domain: this domain comprises the core network (wireless and/or wired) infrastructure (eg IP multimedia subsystem (IMS), evolved packet core (EPC), user data management (UDM), mobile switching station (MSS)) of a licensed network operator;
- Service domain: this domain comprises the service network (wireless and/or wired) infrastructure (relating eg to voice over LTE (VoLTE), rich communication service (RCS), messaging, SMS, multimedia messaging service (MMS), data services) of a licensed network operator; and
- Operator domain (also referred to as a network operator domain): this domain is understood to cover the access domain, network domain and/or service domain.

Furthermore, a network operator, also known as a service provider or communication network carrier, is a provider of services that owns or controls all the elements necessary to sell and deliver services to an end user including eg radio spectrum allocation, wireless or wired infrastructure and/or core network infrastructure.

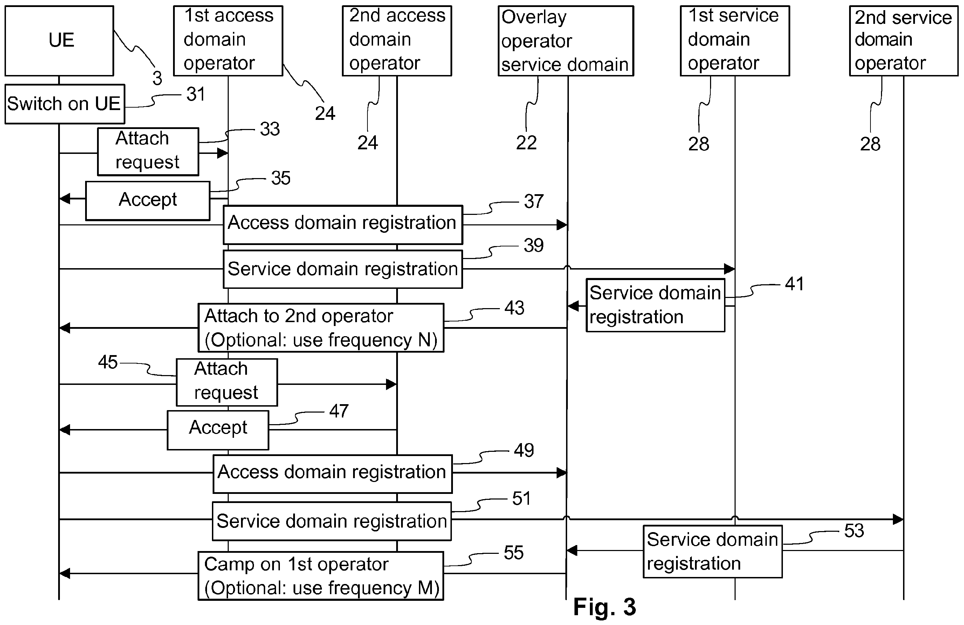

With reference to the flow chart of Figure 3, an initial network attach process is explained next. In step 31, the user switches on the mobile phone 3. In step 33, the mobile phone 3 sends an attach request to a first access domain 24. In step 35, the first operator carries out a standard compliant attach process including authentication and authorisation of the subscriber identity at the first operator, and then accepts the request. In step 37, the mobile phone 3 informs the overlay operator service domain 22 that the attachment process to the first access domain 24 was successful. In step 39, the mobile phone 3 registers to a first service domain 28 (first service domain attachment). In step 41, the first service domain 28 of the first operator domain informs the overlay operator service domain 22 that the mobile phone 3, or more specifically the first USIM1/ISIM, has been successfully registered to the first service domain 28. In step 43, the overlay operator service domain 22 requests the mobile phone 3 to also attach to the second operator domain (and optionally to other operator domains 25 if there are any suitable ones). In this step, the overlay operator service domain 22 may optionally inform the mobile phone 3 about the broadcast channel frequency (or a range of frequencies) of the second operator domain for the current location of the mobile phone 3. For this purpose, the overlay operator service domain 22 preferably knows the location of the mobile phone 3. It is to be noted that the broadcast channel frequencies are operator dependent and may vary for different base stations depending on their location.

In step 45, the mobile phone 3 sends an attach request to a second access domain 24. In step 47, the second operator carries out a standard compliant attach process including authentication and authorisation of the subscriber identity at the second operator, and then accepts the request. In step 49, the mobile phone 3 informs the overlay operator service domain 22 that the attach process to the second access domain 24 was successful. In step 51, the mobile phone 3 registers to a second service domain 28 (service domain attachment of the second operator). In step 53, the second service domain 28 informs the overlay operator service domain 22 that the mobile phone 3, or more specifically the second USIM/ISIM 7, has been successfully registered to the second service domain 28. In step 55, the overlay operator service domain 22 requests the mobile phone 3 to camp on the first operator domain 25, which is the default operator domain for the mobile phone 3 among all the operator domains 25. Also in this step, the overlay operator service domain 22 may optionally inform the mobile phone 3 about the broadcast channel frequency (or a range of frequencies) of the second operator domain for the current location of the mobile phone 3. For this purpose, the overlay operator service domain 22 preferably knows the location of the mobile phone 3.

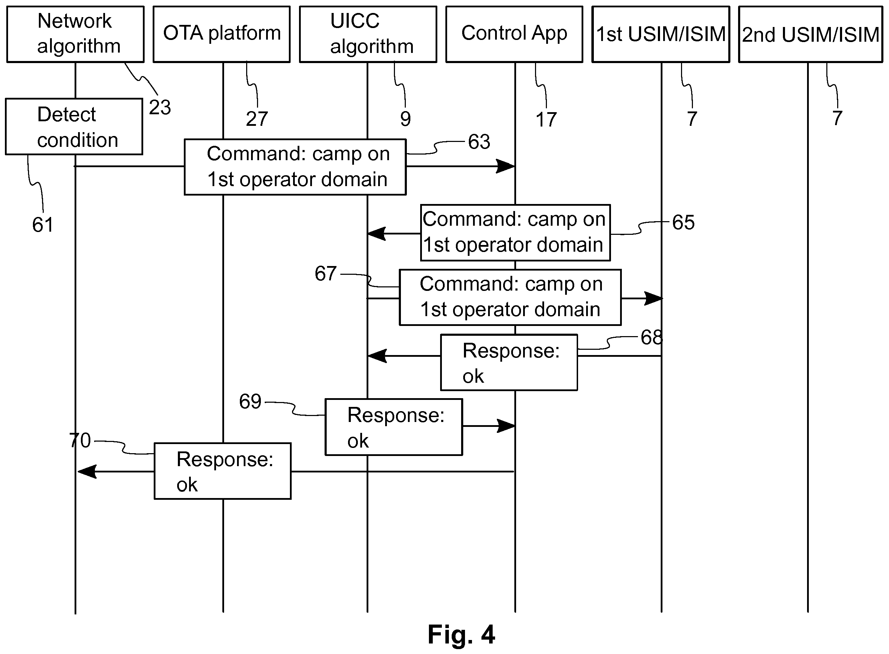

The procedure carried out in step 55 is explained next in more detail with reference to the flow chart of Figure 4. In this example, the camping command or request is sent by using the control app 17. In step 61, the network algorithm 23 detects an event or condition. In this case the event is a command received from the overlay operator service domain 22 to make the mobile phone to camp on the first operator domain 25. The other domains (in this example the second domain) remain active, ie the mobile phone 3 remains attached to these domains. This step may also comprise determining on which operator domain 25 the mobile phone 3 should be camped. In step 63, the network algorithm 23 commands the control app 17 via a secure IP channel to make the mobile phone 3 to camp on the first operator domain 25. In step 65, the control app 17 commands the UICC algorithm 9 to make the mobile to camp on the first operator domain 25. In step 67, the UICC algorithm 9 instructs the first USIM/ISIM 7 to camp on the first operator domain 25. In step 68, the UICC algorithm 9 receives a confirmation from the first USIM/ISIM that the mobile phone 3 is now camped on the first operator domain, ie it is now listening to the BCCH of the first operator domain. In step 69, the UICC algorithm 9 informs the control app 17 that the camping procedure was successful and in step 70, the control app 17 informs the network algorithm 23 that the camping process was successful. It is to be noted that the feedback information is optional (also in the following scenarios). Furthermore, according to the present invention, if the camping process fails for some reason, then the mobile phone 3 may be made to camp on the default domain or on another domain, for example it the default domain is not available.

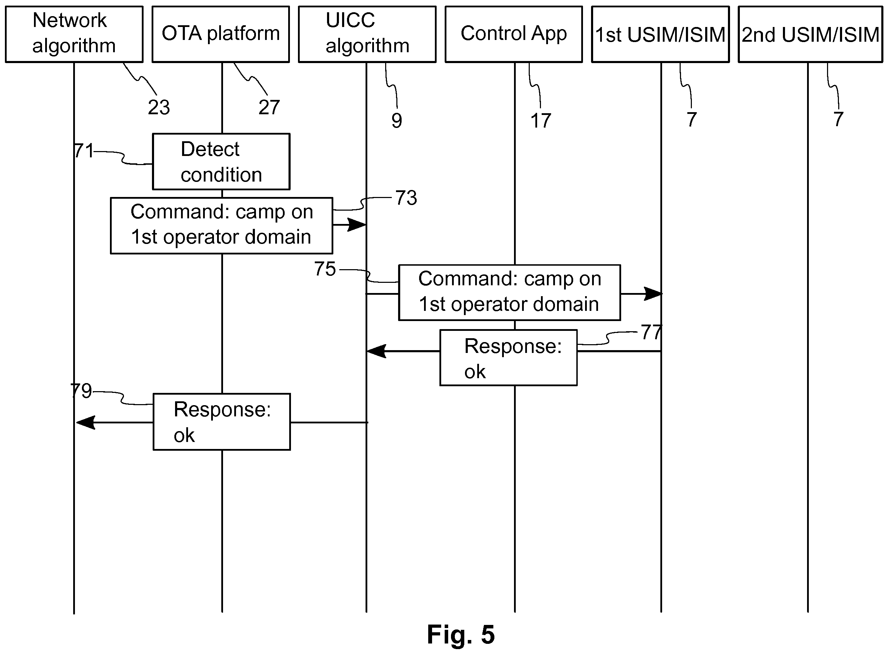

Instead of following the steps illustrated in Figure 4, the step 55 can be carried out as outlined in the flow chart of Figure 5. In this example, the camping command or request is sent by using the OTA platform 27. The procedure is quite similar to the procedure illustrated in the flow chart of Figure 4 with the main difference that the control app 17 is not involved in this scenario. In step 71, the OTA platform 27 detects an event in the network (or that a camping switching criterion has been fulfilled), which triggers the camping process. This step may also comprise determining on which operator domain 25 the mobile phone 3 should be camped. It is to be noted that the event could be detected by another entity instead, eg the network algorithm 23. In this example, it is determined that the mobile phone 3 should camp on the domain 1. In step 73, the OTA platform 27 commands the UICC algorithm 9 to make the mobile phone 3 to camp on the domain 1 by sending a short message (SMS) to the UICC algorithm 9. The remaining steps 75, 77 and 79 substantially correspond to the steps 67, 68 and 70 with the exception that in step 79, the response is directly sent from the UICC algorithm 9 to the network algorithm 23 or via the control app 17.

It is to be noted that the principles explained above with reference to the flow charts of Figures 4 and 5 also apply if the mobile phone 3 is requested to camp on the second operator domain 25 or any other operator domain. In that case the camping command is sent to the corresponding USIM/ISIM, eg to the second USIM/ISIM if the mobile phone 3 should camp on the second operator domain 25. It is to be noted that the network 1 may at any moment command the mobile phone 3 to camp on a particular operator domain 25 or the network 1 may command the mobile phone 3 to use a particular subscription for the camping and to camp on the operator domain 25 linked to that particular subscription. Since the overlay operator domain 20 is aware of the network operational conditions in the network, it may, based on this information, rank the domains in order of preference. The camping process may be initiated if a given camping condition or criterion is fulfilled or that a given event has taken place in the operator domain, where the mobile phone 3 is currently camping. The condition or event may be for example at least one of the following: network outage, network malfunction, network performance (degradation), network service break and network redundancy in another domain. The physical location of the mobile phone 3 could also be used for determining which subscription should be used next for the camping. This may be particularly advantageous if the user remains in the same operator domain after the camping switch. The physical location may be obtained from a satellite positioning system or from a cell identity (ID) of a cellular network, for instance. In this manner, a first subscription could be used when the mobile phone 3 is within a given boundary (eg company premises or a campus) and a second subscription when outside of the boundary. A time aspect could be also used alone or in combination with the above events/criteria for determining which subscription should be used. For example, from Monday to Friday, the first subscription should be used while on Saturday and Sunday the second subscription should be used. Login information or status (eg to a company domain or to a specific information technology (IT) domain) may also be used alone or in combination with the above features for determining which subscription should be used.

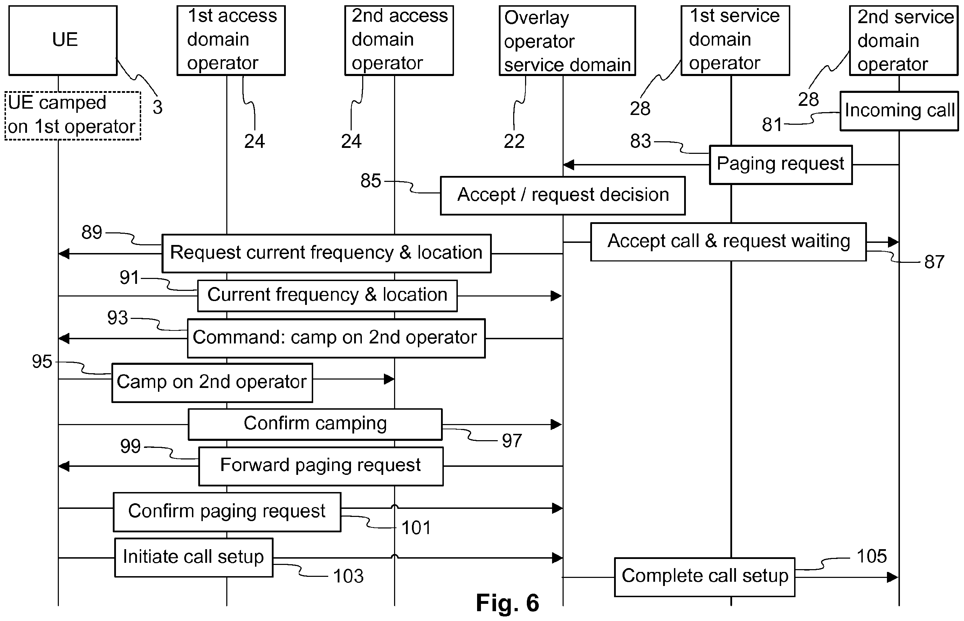

The flow chart of Figure 6 illustrates an incoming call (terminating call) processing flow according to one example. In this example, the mobile phone 3 is initially camped on the first operator domain by using the first USIM/ISIM 7 but the incoming call tries to reach the mobile phone 3 in the second operator domain. It is to be noted that the first and second operator domains 25 could be the same operator domain but where two different subscriptions are used simultaneously by the mobile phone 3. In step 81, an incoming call is detected. In step 83, the second service domain operator 28 sends a paging request to the overlay operator service domain 22 and tries to locate the mobile phone 3. In step 85, the overlay operator service domain 22 decides to either accept or reject the incoming call. The call could be rejected for instance if the mobile phone 3 is turned off or if the mobile phone 3 is not located in any of the operator domains 25 managed by the overlay operator domain 20. In this example, the incoming call is accepted in step 87 and the second service domain operator 28 is informed about this decision. Optionally the second service domain operator 28 is requested to wait a moment before the call setup procedure can be completed. In step 89, the overlay operator service domain 22 requests the mobile phone 3 to inform the overlay operator service domain 22 about the mobile phone's geographical location and its control channel frequency (BCCH frequency) it is currently listening to. The geographical location may be obtained from a satellite positioning system running on the mobile phone 3 or it can be the cell ID of the network cell where the mobile phone 3 is currently located. In step 91, the mobile phone 3 provides this set of information to the overlay operator service domain 22. The overlay operator service domain 22 may use this information to build the control channel network frequency map indicating where particular control frequencies of particular operators are used in the network 1. It is to be noted that the steps 89 and 91 are optional. For instance, if the overlay operator service domain 22 already has an up-to-date frequency map, the steps 89 and 91 may be omitted.

In step 93, the overlay operator service domain 22 requests the mobile phone 3 to camp on the second operator domain 25. The overlay operator service domain 22 optionally gives the mobile phone 3 the control channel (BCCH) frequency of the second operator domain to make it easier and quicker for the mobile phone to camp on the second operator domain. If the current control channel frequency of the second operator domain 25 is not given, then the mobile phone may have to scan the whole range of control channel frequencies to be able to camp on the second operator domain. In step 95, the mobile phone 3 camps on the second operator domain 25, ie it starts listening to the BCCH of the second operator domain 25. This procedure may be carried out by following the teachings of the flow charts of Figures 4 or 5. In step 97, the mobile phone confirms to the overlay operator service domain 22 that the mobile phone 3 is now camped on the second operator domain. In step 99, the overlay operator service domain 22 forwards the paging request from the second operator domain 25 to the mobile phone 3. In step 101, the mobile phone confirms the paging request to the overlay operator service domain 22. In step 103, the mobile phone 3 initiates call setup procedure and in step 105, the call setup procedure is completed.

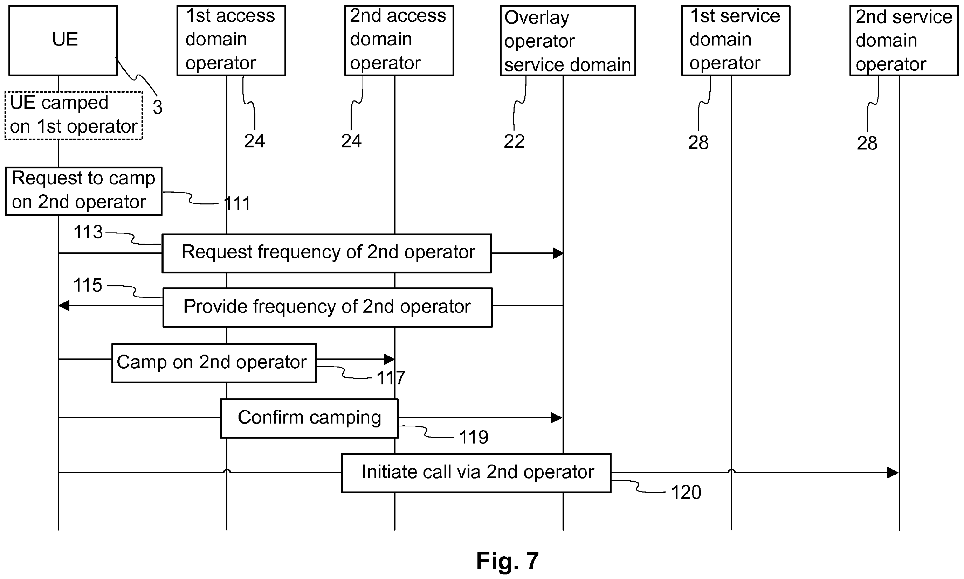

The flow chart of Figure 7 illustrates an outgoing call processing flow according to one example. In this example, the mobile phone 3 is initially camped on the first operator domain 25 by using the first USIM/ISIM but the call is made in the second operator domain 25. Also in this scenario, the first and second operator domains could be the same operator domain but where two different subscriptions are used simultaneously by the mobile phone 3. In step 111, the user of the mobile phone 3 requests to change camping to camp on the second operator domain 25. In step 113, the mobile phone 3 requests the overlay operator service domain 22 to provide the mobile phone 3 with the control channel (BCCH) frequency of the second operator domain 25. At the same time, the mobile phone 3 also informs the overlay operator service domain 22 about its location and optionally also about the current control channel frequency of the first operator domain 25. In this manner the overlay operator service domain 22 may use this information to generate or update the frequency map. In step 115, the overlay operator service domain 22 informs the mobile phone 3 about the control channel frequency of the first operator domain for the mobile phone's current location. In step 117, the mobile phone 3 starts camping on the second operator domain 25. This procedure may be carried out by following the teachings of the flow charts of Figures 4 or 5. In step 119, the mobile phone 3 confirms to the overlay operator service domain 22 that it is now camping on the second operator domain 25. In step 120, the mobile phone 3 initiates the call via the second operator domain 25.

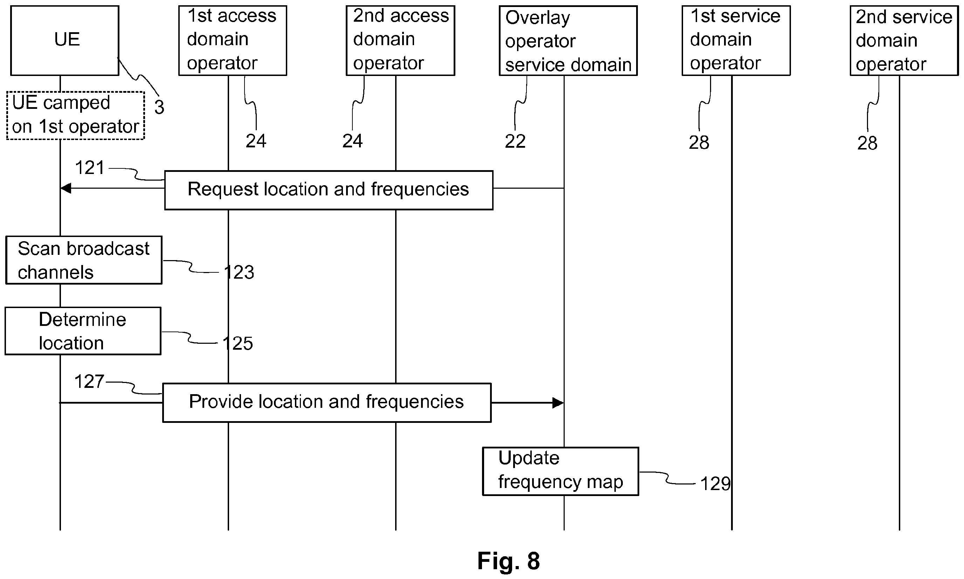

The flow chart of Figure 8 illustrates the process of generating the frequency map according to one example. In this example the mobile phone 3 is initially camped on the first operator domain 25. In step 121, the overlay operator service domain 22 requests the mobile phone 3 to provide its location (eg the cell ID) and the control channel frequencies in its current location for its USIMs/ISIMs. For this purpose, in step 123, the mobile phone 3 scans a range of possible control channels frequencies to determine the current control channel frequencies in its current location for its USIMs/ISIMs. In step 125, the mobile phone 3 determines its location. The location can be obtained from the cell ID or it can be determined by using a satellite positioning system, for example. In step 127, the mobile phone 3 provides the location and frequencies to the overlay operator service domain 22, which in step 129 updates the frequency map.

It is to be noted that if for some reason the OTA platforms 27 are not available in the operator domains 25, an OTA platform of the overlay operator domain 20 could be used instead. It is to be noted that the OTA platforms 27 cannot directly command mobile phones 3 which do not belong the subscriber basis of the OTA platform 27. The over-the-air provisioning is only possible between an operator and subscriber identity modules belonging to it. The OTA mechanism enables the operator to provision/modify the network settings of a specific user terminal of its subscriber basis. Since the subscriber identity module credentials are directly linked to a specific operator, it is not possible for the operator to send OTA commands to subscriber identity modules which do not belong to it. To carry out the over-the-air provisioning, a set of short messages is typically sent to a specific terminal to (re)configure it. Thus, if the mobile phone 3 does not belong to the subscriber basis of the overlay operator domain 20, the mobile phone 3 is first brought to the overlay operator domain 20 (which may or may not a normal network operator with private and company clients etc.) by following the teachings of the flow chart of Figure 4, for instance. Only after that, the over-the-air provisioning may be used by using the OTA platform 27 of the overlay operator domain 20.

The teachings of the present invention were explained above in the context of the UICC. However, the teachings of the present invention are likewise applicable to eSIMs or traditional SIMs, for example. In the case of eSIMs, the USIM/ISIM configurations could be deleted and/or installed remotely. Furthermore, the interface 15, or any other corresponding element, may be used by the user of the mobile phone 3 to force the mobile phone 3 to the default domain at any moment. In this case, the interface 15 would instruct the API reset 11 to make the mobile phone 3 to camp on the default domain. More broadly, the UICC 9 may be configured to detect any domain or subscription switch request initiated by external systems and is configured to react as programmed. It is to be noted that the OTA platform 27 could be replaced by another communication platform to allow electronic communication between that communication platform and the API domain change 13. In a further variant of the present invention, the control app 17 may possess all or some of the functionalities of the network processing unit 19 or the overlay operator service domain 22. In this special case, the mobile phone 3 would have at least some control over the camping domain switching. This way of operating would be enabled by the network processing unit 19 and/or by the overlay operator service domain 22 and could be used eg in some emergency situations. The user initiated switching may however need to be approved by the network processing unit 19 and/or the overlay operator service domain 22. Furthermore, it is possible to carry out the switching process so that if the mobile phone 3 comprises the USIM/ISIM pair, then only one of these modules is switched to another domain (eg so that the first USIM and the second ISIM are both active at the same time). In the scenarios illustrated in the drawings, the user subscription camping switching is carried out between different also performed within a single operator domain. This would be the case for example, if the network subscriber would switch from using its private USIM/ISIM to its company USIM/ISIM or vice versa.

The network algorithm 23 and/or the overlay operator service domain 22 decide(s) how and/or when to initiate the camping switching and how to execute it. According to this example, the OTA platforms 27 in the operator domains 25 are controlled by the network algorithm 23. There are several ways to transfer the switching command from the network algorithm 23 to the UICC algorithm 9 depending for example on the domain and access technology, and the network algorithm 23 should be able to select the most suitable one. For instance, if the OTA platforms 27 are available in the operator domains 25, then the OTA approach (via SMS) may be the preferred one. If the mobile phone 3 is connected to an operator domain 25 via LTE or via another IP network connection, then the existing IP connection by using the control app 17 may be used. If the mobile phone 3 is connected to an operator domain 25 or is roaming via 3G/2G network or via another non-IP network, then an IP connection could be initiated via a push SMS (and the switch could be carried out by using the control app 17). Alternatively, the control app 17 could regularly or not poll for any pending event (from the network algorithm 23).

While the invention has been illustrated and described in detail in the drawings and foregoing description, such illustration and description are to be considered illustrative and not restrictive, the invention being not limited to the disclosed embodiment. The invention is set out in the appended claims.

## Claims

1. A method of operating a wireless communication terminal (3) in a wireless communication network (1), the communication terminal (3) comprising at least a first subscriber identity instrument (7) defining a first network operator domain subscription for accessing a first network operator domain (25), and a second subscriber identity instrument (7) defining a second network operator domain subscription, different from the first network operator domain subscription, for accessing a second network operator domain (25), a respective network operator domain covering an access domain, a network domain and/or a service domain, wherein the access domain comprises a communication network access infrastructure of a licensed network operator, the network domain comprises a core network infrastructure of the licensed network operator, and the service domain comprises a service network infrastructure of the licensed network operator, the method comprising:
• the communication terminal (3) requesting (33) a first network operator domain attachment procedure for attaching to the first network operator domain (25) by activating the first subscriber identity instrument (7), the attachment procedure including authenticating and authorising a first subscriber identity of the first subscriber identity instrument (7) at the first network operator domain (25);
• the communication terminal (3) requesting (45) a second network operator domain attachment procedure for attaching to the second network operator domain (25) by activating the second subscriber identity instrument (7), the attachment procedure including authenticating and authorising a second subscriber identity of the second subscriber identity instrument (7) at the second network operator domain (25); and
• the communication terminal (3) camping (55) on only one of the first and second network operator domains (25) at a time for communicating in the communication network (1), the camping comprising listening to a broadcast channel of a respective network operator domain,
wherein, after the first and second network operator domain attachment procedures, the communication terminal (3) remains simultaneously attached to the first and second network operator domains (25) while operating on only one radio frequency at a time for communicating in the communication network (1), the method being **characterised in that** the method further comprising:
• receiving, in response to a network overlay operator domain, referred to as a third network operator domain (20), detecting that at least one camping switch criterion has been fulfilled in the communication network (1), a command from the third network operator domain (20) to initiate a camping switch from the first network operator domain (25) to the second network operator domain (25) or vice versa, the command being received via an over-the-air programming platform (27) of the first or second network operator domain (25), or over an internet protocol connection by using a control application in the communication terminal (3),
wherein, from the services point of view, the first and second network operator domains are slave domains, and the third network operator domain (20) is a master domain having control over the slave domains (25), and the third network operator domain (20) knows on which operator domain the wireless communication terminal (3) is currently camped.

2. The method according to claim 1, wherein the at least one switch criterion is at least one of the following: operator domain outage, operator domain malfunction, operator domain redundancy, operator domain service break, given physical location of the communication terminal and given time instant.

3. The method according to claim 1 or 2, wherein the method further comprises the third network operator domain (20) ranking a multiplicity of network operator domains of the communication network (1) in order of preference.

4. The method according to any one of the preceding claims, wherein the control application (17) of the communication terminal (3) receives (63) the command from the third network operator domain (20) to carry out the camping switch, and requests (65) a processing algorithm (9) of the communication terminal (3) to camp on the first or second network operator domain (25).

5. The method according to any one of the preceding claims, wherein the first network operator domain (25) and/or the second network operator domain (25) comprise(s) the over-the-air programming platform (27), and wherein the over-the-air programming platform (27) sends (73), in response to the command received from a network algorithm (23) of the third network operator domain (20), a message to a processing algorithm (9) of the communication terminal (3) to carry out the camping switch.

6. The method according to any one the preceding claims, wherein the control application (17) of the communication terminal (3) determines that the communication terminal (3) should initiate another camping switch from the first network operator domain (25) to the second network operator domain (25), or vice versa, and wherein the control application (17) requests the processing algorithm (9) of the communication terminal (3) to carry out the other camping switch.

7. The method according to any one of the preceding claims, wherein the method further comprises the third network operator domain (20):
• receiving (81) a paging request from the second network operator domain (25) in response to an incoming call in the second network operator domain (25) intended for the communication terminal (3); and
• instructing (93), via the over-the-air programming platform (27) of the first or second network operator domain (25), or over an internet protocol connection by using the control application in the communication terminal (3), the communication terminal (3) to camp on the second network operator domain (25).

8. The method according to claim 7, wherein the method further comprises the third network operator domain (20):
• determining (91) a current location of the communication terminal (3) after having received the paging request; and
• informing (93) the communication terminal (3) about a broadcast channel frequency of the second network operator domain (25) in the current location of the communication terminal (3).

9. The method according to any one of the preceding claims, wherein the method further comprises the third network operator domain (20):
• sending (121) a location and frequency request to the communication terminal (3) for determining a current location of the communication terminal (3) and a first broadcast channel frequency used by the first network operator domain (25) and/or a second broadcast channel frequency used by the second network operator domain (25) in the current location of the communication terminal (3);
• receiving (127) an information set from the communication terminal (3), the information set comprising the current location of the communication terminal (3) and the first broadcast channel frequency and/or the second broadcast channel frequency; and
• generating or updating (129), based on the received information set, a broadcast channel network frequency map for the communication network (1).

10. A wireless communication terminal (3) for communicating in a wireless communication network (1), the communication terminal (3) comprising at least a first subscriber identity instrument (7) defining a first network operator domain subscription for accessing a first network operator domain (25), and a second subscriber identity instrument (7) defining a second network operator domain subscription, different from the first network operator domain subscription, for accessing a second network operator domain (25), a respective network operator domain covering an access domain, a network domain and/or a service domain, wherein the access domain comprises a communication network access infrastructure of a licensed network operator, the network domain comprises a core network infrastructure of the licensed network operator, and the service domain comprises a service network infrastructure of the licensed network operator, the communication terminal (3) comprising means for:
• requesting a first network operator domain attachment procedure for attaching to the first network operator domain (25) by activating the first subscriber identity instrument (7), the attachment procedure including authenticating and authorising a first subscriber identity of the first subscriber identity instrument (7) at the first network operator domain (25);
• requesting a second network operator domain attachment procedure for attaching to the second network operator domain (25) by activating the second subscriber identity instrument (7), the attachment procedure including authenticating and authorising a second subscriber identity of the second subscriber identity instrument (7) at the second network operator domain (25); and
• camping on only one of the first and second network operator domains (25) at a time for communicating in the communication network (1), the camping comprising listening to a broadcast channel of a respective network operator domain,
wherein, after the first and second network operator domain attachment procedures, the communication terminal (3) is arranged to remain simultaneously attached to the first and second network operator domains (25) while being arranged to operate on only one radio frequency at a time for communicating in the communication network (1), the wireless communication terminal (3) being **characterised in that** it further comprises means for:
• receiving, in response to a network overlay operator domain, referred to as a third network operator domain (20), detecting that at least one camping switch criterion has been fulfilled in the communication network (1), a command from the third network operator domain (20) to initiate a camping switch from the first network operator domain (25) to the second network operator domain (25) or vice versa, the command being received via an over-the-air programming platform (27) of the first or second network operator domain (25), or over an internet protocol connection by using a control application in the communication terminal (3),
wherein, from the services point of view, the first and second network operator domains are slave domains, and the third network operator domain (20) is a master domain having control over the slave domains (25), and the third network operator domain (20) knows on which operator domain the wireless communication terminal (3) is currently camped.

11. The communication terminal (3) according to claim 10, wherein the communication terminal (3) is a single subscriber identity unit communication terminal (3), and wherein the single subscriber identity unit (5) comprises the first subscriber identity instrument (7) and the second subscriber identity instrument (7).

12. The communication terminal (3) according to claim 11, wherein the subscriber identity unit (5) is a universal integrated circuit card or an embedded subscriber identity module, and wherein the first subscriber identity instrument (7) comprises a first universal subscriber identity module and/or an internet protocol multimedia services identity module of the first network operator domain (25), while the second subscriber identity instrument (7) comprises a second universal subscriber identity module and/or an internet protocol multimedia services identity module of the second network operator domain (25).

## Patentansprüche

1. Verfahren zum Betreiben eines drahtlosen Kommunikationsendgeräts (3) in einem drahtlosen Kommunikationsnetz (1), wobei das Kommunikationsendgerät (3) wenigstens ein erstes Teilnehmeridentitätsinstrument (7), das ein erstes Netzbetreiberdomänenabonnement zum Zugreifen auf eine erste Netzbetreiberdomäne (25) definiert, und ein zweites Teilnehmeridentitätsinstrument (7) umfasst, das ein zweites Netzbetreiberdomänenabonnement, das sich von dem ersten Netzbetreiberdomänenabonnement unterscheidet, zum Zugreifen auf eine zweite Netzbetreiberdomäne (25) definiert, wobei eine jeweilige Netzbetreiberdomäne eine Zugriffsdomäne, eine Netzdomäne und/oder eine Dienstdomäne abdeckt, wobei die Zugriffsdomäne eine Kommunikationsnetzzugriffsinfrastruktur eines lizenzierten Netzbetreibers umfasst, die Netzdomäne eine Kernnetzinfrastruktur des lizenzierten Netzbetreibers umfasst und die Dienstdomäne eine Dienstnetzinfrastruktur des lizenzierten Netzbetreibers umfasst, wobei das Verfahren umfasst, dass:
• das Kommunikationsendgerät (3) eine Anmeldungsvorgehensweise für die erste Netzbetreiberdomäne zum Anmelden an die erste Netzbetreiberdomäne (25) durch Aktivieren des ersten Teilnehmeridentitätsinstruments (7) anfordert (33), wobei die Anmeldungsvorgehensweise ein Authentifizieren und ein Autorisieren einer ersten Teilnehmeridentität des ersten Teilnehmeridentitätsinstruments (7) an der ersten Netzbetreiberdomäne (25) umfasst;
• das Kommunikationsendgerät (3) eine Anmeldungsvorgehensweise für die zweite Netzbetreiberdomäne zum Anmelden an die zweite Netzbetreiberdomäne (25) durch Aktivieren des zweiten Teilnehmeridentitätsinstruments (7) anfordert (45), wobei die Anmeldungsvorgehensweise ein Authentifizieren und ein Autorisieren einer zweiten Teilnehmeridentität des zweiten Teilnehmeridentitätsinstruments (7) an der zweiten Netzbetreiberdomäne (25) umfasst; und
• das Kommunikationsendgerät (3) auf jeweils nur der ersten oder der zweiten Netzbetreiberdomäne (25) zum Kommunizieren in dem Kommunikationsnetz (1) kampiert (55), wobei das Kampieren das Abhören eines Broadcast-Kanals einer jeweiligen Netzbetreiberdomäne umfasst,
wobei nach der Anmeldungsvorgehensweise für die erste und die zweite Netzbetreiberdomäne das Kommunikationsendgerät (3) gleichzeitig an der ersten und der zweiten Netzbetreiberdomäne (25) angemeldet bleibt, während es jeweils nur auf einer Hochfrequenz zum Kommunizieren in dem Kommunikationsnetz (1) betreibt, wobei das Verfahren **dadurch gekennzeichnet ist, dass** das Verfahren ferner Folgendes umfasst:
• Empfangen, als Reaktion auf ein Erfassen durch eine Netzüberlagerungsbetreiberdomäne, die als dritte Netzbetreiberdomäne (20) bezeichnet wird, dass wenigstens ein Kampierwechselkriterium in dem Kommunikationsnetz (1) erfüllt wurde, eines Befehls von der dritten Netzbetreiberdomäne (20), einen Kampierwechsel von der ersten Netzbetreiberdomäne (25) zu der zweiten Netzbetreiberdomäne (25) oder umgekehrt einzuleiten, wobei der Befehl über eine Over-the-Air-Programmierplattform (27) der ersten oder der zweiten Netzbetreiberdomäne (25) oder mittels einer Internetprotokollverbindung durch Verwenden einer Steueranwendung in dem Kommunikationsendgerät (3) empfangen wird,
wobei aus Sicht der Dienste die erste und die zweite Netzbetreiberdomäne Unterdomänen sind und die dritte Netzbetreiberdomäne (20) eine Hauptdomäne ist, die eine Steuerung der Unterdomänen (25) aufweist, und die dritte Netzbetreiberdomäne (20) weiß, auf welcher Betreiberdomäne das drahtlose Kommunikationsendgerät (3) gerade kampiert.

2. Verfahren nach Anspruch 1, wobei das wenigstens eine Wechselkriterium wenigstens eines der Folgenden ist:
Ausfall der Betreiberdomäne, Fehlfunktion der Betreiberdomäne, Redundanz der Betreiberdomäne, Unterbrechung des Betreiberdomänendienstes, gegebener physischer Standort des Kommunikationsendgeräts und gegebener Zeitpunkt.

3. Verfahren nach Anspruch 1 oder 2, wobei das Verfahren ferner die dritte Netzbetreiberdomäne (20) umfasst, die mehrere Netzbetreiberdomänen des Kommunikationsnetzes (1) nach Präferenzreihenfolge ordnet.

4. Verfahren nach einem der vorhergehenden Ansprüche, wobei die Steueranwendung (17) des Kommunikationsendgeräts (3) den Befehl von der dritten Netzbetreiberdomäne (20) empfängt (63), den Kampierwechsel auszuführen, und einen Verarbeitungsalgorithmus (9) des Kommunikationsendgeräts (3) anfordert (65), um auf der ersten oder der zweiten Netzbetreiberdomäne (25) zu kampieren.

5. Verfahren nach einem der vorhergehenden Ansprüche, wobei die erste Netzbetreiberdomäne (25) und/oder die zweite Netzbetreiberdomäne (25) die Over-the-Air-Programmierplattform (27) umfassen/umfasst und wobei die Over-the-Air-Programmierplattform (27) als Reaktion auf den Befehl, der von einem Netzalgorithmus (23) der dritten Netzbetreiberdomäne (20) empfangen wird, eine Nachricht an einen Verarbeitungsalgorithmus (9) des Kommunikationsendgeräts (3) sendet (73), um den Kampierwechsel auszuführen.

6. Verfahren nach einem der vorhergehenden Ansprüche, wobei die Steueranwendung (17) des Kommunikationsendgeräts (3) bestimmt, dass das Kommunikationsendgerät (3) einen weiteren Kampierwechsel von der ersten Netzbetreiberdomäne (25) zu der zweiten Netzbetreiberdomäne (25) oder umgekehrt einleiten soll, und wobei die Steueranwendung (17) den Verarbeitungsalgorithmus (9) des Kommunikationsendgeräts (3) anfordert, um den anderen Kampierwechsel auszuführen.

7. Verfahren nach einem der vorhergehenden Ansprüche, wobei das Verfahren ferner umfasst, dass die dritte Netzbetreiberdomäne (20):
• eine Paging-Anfrage von der zweiten Netzbetreiberdomäne (25) als Reaktion auf einen eingehenden Anruf in der zweiten Netzbetreiberdomäne (25), der für das Kommunikationsendgerät (3) bestimmt ist, erhält (81); und
• über die Over-the-Air-Programmierplattform (27) der ersten oder der zweiten Netzbetreiberdomäne (25) oder mittels einer Internetprotokollverbindung durch Verwenden der Steueranwendung in dem Kommunikationsendgerät (3) das Kommunikationsendgerät (3) anweist (93), auf der zweiten Netzbetreiberdomäne (25) zu kampieren.

8. Verfahren nach Anspruch 7, wobei das Verfahren ferner umfasst, dass die dritte Netzbetreiberdomäne (20):
• einen aktuellen Standort des Kommunikationsendgeräts (3) nach dem Empfangen der Paging-Anfrage bestimmt (91); und
• das Kommunikationsendgerät (3) über eine Broadcast-Kanalfrequenz der zweiten Netzbetreiberdomäne (25) an dem aktuellen Standort des Kommunikationsendgeräts (3) informiert (93).

9. Verfahren nach einem der vorhergehenden Ansprüche, wobei das Verfahren ferner umfasst, dass die dritte Netzbetreiberdomäne (20):
• an das Kommunikationsendgerät (3) zum Bestimmen eines aktuellen Standorts des Kommunikationsendgeräts (3) eine Orts- und Frequenzanforderung und eine erste Broadcast-Kanalfrequenz, die von der ersten Netzbetreiberdomäne (25) verwendet wird, und/oder eine zweite Broadcast-Kanalfrequenz, die von der zweiten Netzbetreiberdomäne (25) an dem aktuellen Standort des Kommunikationsendgeräts (3) verwendet wird, sendet (121);
• einen Informationssatz von dem Kommunikationsendgerät (3) empfängt (127), wobei der Informationssatz den aktuellen Standort des Kommunikationsendgeräts (3) und die erste Broadcast-Kanalfrequenz und/oder die zweite Broadcast-Kanalfrequenz umfasst; und
• basierend auf dem empfangenen Informationssatz eine Broadcast-Kanalnetzfrequenzkarte für das Kommunikationsnetz (1) erzeugt oder aktualisiert (129).

10. Drahtloses Kommunikationsendgerät (3) zum Kommunizieren in einem drahtlosen Kommunikationsnetz (1), wobei das Kommunikationsendgerät (3) wenigstens ein erstes Teilnehmeridentitätsinstrument (7), das ein erstes Netzbetreiberdomänenabonnement zum Zugreifen auf eine erste Netzbetreiberdomäne (25) definiert, und ein zweites Teilnehmeridentitätsinstrument (7) umfasst, das ein zweites Netzbetreiberdomänenabonnement, das sich von dem ersten Netzbetreiberdomänenabonnement unterscheidet, zum Zugreifen auf eine zweite Netzbetreiberdomäne (25) definiert, wobei eine jeweilige Netzbetreiberdomäne eine Zugriffsdomäne, eine Netzdomäne und/oder eine Dienstdomäne abdeckt, wobei die Zugriffsdomäne eine Kommunikationsnetzzugriffsinfrastruktur eines lizenzierten Netzbetreibers umfasst, die Netzdomäne eine Kernnetzinfrastruktur des lizenzierten Netzbetreibers umfasst und die Dienstdomäne eine Dienstnetzinfrastruktur des lizenzierten Netzbetreibers umfasst, wobei das Kommunikationsendgerät (3) Mittel zu Folgendem umfasst:
• Anfordern einer Anmeldungsvorgehensweise für die erste Netzbetreiberdomäne zum Anmelden an die erste Netzbetreiberdomäne (25) durch Aktivieren des ersten Teilnehmeridentitätsinstruments (7), wobei die Anmeldungsvorgehensweise ein Authentifizieren und ein Autorisieren einer ersten Teilnehmeridentität des ersten Teilnehmeridentitätsinstruments (7) an der ersten Netzbetreiberdomäne (25) umfasst;
• Anfordern einer Anmeldungsvorgehensweise für die zweite Netzbetreiberdomäne zum Anmelden an die zweite Netzbetreiberdomäne (25) durch Aktivieren des zweiten Teilnehmeridentitätsinstruments (7), wobei die Anmeldungsvorgehensweise ein Authentifizieren und ein Autorisieren einer zweiten Teilnehmeridentität des zweiten Teilnehmeridentitätsinstruments (7) an der zweiten Netzbetreiberdomäne (25) umfasst; und
• Kampieren auf jeweils nur der ersten oder der zweiten Netzbetreiberdomäne (25) zum Kommunizieren in dem Kommunikationsnetz (1), wobei das Kampieren das Abhören eines Broadcast-Kanals einer jeweiligen Netzbetreiberdomäne umfasst, wobei nach der Anmeldungsvorgehensweise für die erste und die zweite
Netzbetreiberdomäne das Kommunikationsendgerät (3) angeordnet ist, um gleichzeitig an der ersten und der zweiten Netzbetreiberdomäne (25) angemeldet zu bleiben, während es angeordnet wird, jeweils nur auf einer Hochfrequenz zum Kommunizieren in dem Kommunikationsnetz (1) zu betreiben, wobei das drahtlose Kommunikationsendgerät (3) **dadurch gekennzeichnet ist, dass** es ferner Mittel zu Folgendem umfasst:
• Empfangen, als Reaktion auf ein Erfassen durch eine Netzüberlagerungsbetreiberdomäne, die als dritte Netzbetreiberdomäne (20) bezeichnet wird, dass wenigstens ein Kampierwechselkriterium in dem Kommunikationsnetz (1) erfüllt wurde, eines Befehls von der dritten Netzbetreiberdomäne (20), einen Kampierwechsel von der ersten Netzbetreiberdomäne (25) zu der zweiten Netzbetreiberdomäne (25) oder umgekehrt einzuleiten, wobei der Befehl über eine Over-the-Air-Programmierplattform (27) der ersten oder der zweiten Netzbetreiberdomäne (25) oder mittels einer Internetprotokollverbindung durch Verwenden einer Steueranwendung in dem Kommunikationsendgerät (3) empfangen wird,
wobei aus Sicht der Dienste die erste und die zweite Netzbetreiberdomäne Unterdomänen sind und die dritte Netzbetreiberdomäne (20) eine Hauptdomäne ist, die eine Steuerung der Unterdomänen (25) aufweist, und die dritte Netzbetreiberdomäne (20) weiß, auf welcher Betreiberdomäne das drahtlose Kommunikationsendgerät (3) gerade kampiert.

11. Kommunikationsendgerät (3) nach Anspruch 10, wobei das Kommunikationsendgerät (3) ein Einzelteilnehmeridentitätseinheitskommunikationsendgerät (3) ist und wobei die Einzelteilnehmeridentitätseinheit (5) das erste Teilnehmeridentitätsinstrument (7) und das zweite Teilnehmeridentitätsinstrument (7) umfasst.

12. Kommunikationsendgerät (3) nach Anspruch 11, wobei die Teilnehmeridentitätseinheit (5) eine universelle integrierte Schaltungskarte oder ein eingebettetes Teilnehmeridentitätsmodul ist und wobei das erste Teilnehmeridentitätsinstrument (7) ein erstes universelles Teilnehmeridentitätsmodul und/oder ein Internetprotokollmultimediadienstidentitätsmodul der ersten Netzbetreiberdomäne (25) umfasst, während das zweite Teilnehmeridentitätsinstrument (7) ein zweites universelles Teilnehmeridentitätsmodul und/oder ein Internetprotokollmultimediadienstidentitätsmodul der zweiten Netzbetreiberdomäne (25) umfasst.

## Revendications

1. Procédé d'exploitation d'un terminal de communication sans fil (3) dans un réseau de communication sans fil (1), le terminal de communication (3) comprenant au moins un premier instrument d'identité d'abonné (7) définissant un premier abonnement de domaine d'opérateur de réseau pour accéder à un premier domaine d'opérateur de réseau (25), et un second instrument d'identité d'abonné (7) définissant un second abonnement de domaine d'opérateur de réseau, différent du premier abonnement de domaine d'opérateur de réseau, pour accéder à un deuxième domaine d'opérateur de réseau (25), un domaine d'opérateur de réseau respectif couvrant un domaine d'accès, un domaine de réseau et/ou un domaine de service, le domaine d'accès comprenant une infrastructure d'accès au réseau de communication d'un opérateur de réseau autorisé, le domaine de réseau comprenant une infrastructure de réseau central de l'opérateur de réseau autorisé et le domaine de service comprenant une infrastructure de réseau de service de l'opérateur de réseau autorisé, le procédé comprenant :
• la demande (33), par le terminal de communication (3), d'une première procédure de rattachement au domaine d'opérateur de réseau pour se rattacher au premier domaine d'opérateur de réseau (25) par activation du premier instrument d'identité d'abonné (7), la procédure de rattachement comportant l'authentification et l'autorisation d'une première identité d'abonné du premier instrument d'identité d'abonné (7) au niveau du premier domaine d'opérateur de réseau (25) ;
• la demande (45), par le terminal de communication (3) d'une seconde procédure de rattachement au domaine d'opérateur de réseau pour se rattacher au deuxième domaine d'opérateur de réseau (25) par activation du second instrument d'identité d'abonné (7), la procédure de rattachement comprenant l'authentification et l'autorisation d'une seconde identité d'abonné du second instrument d'identité d'abonné (7) au niveau du deuxième domaine d'opérateur de réseau (25) ; et
• le maintien (55) du terminal de communication (3) sur un seul des premier et deuxième domaines d'opérateur de réseau (25) à la fois pour communiquer dans le réseau de communication (1), le maintien comprenant l'écoute d'un canal de diffusion d'un domaine d'opérateur de réseau respectif,
tandis qu'après les première et seconde procédures de rattachement au domaine d'opérateur de réseau, le terminal de communication (3) reste simultanément rattaché aux premier et deuxième domaines d'opérateur de réseau (25) tout en fonctionnant sur une seule fréquence radio à la fois pour communiquer dans le réseau de communication (1), le procédé **se caractérisant en ce que** le procédé comprend en outre :
• la réception, en réponse à la détection du fait qu'un domaine d'opérateur de superposition de réseau, appelé troisième domaine d'opérateur de réseau (20), a vérifié au moins un critère de commutation de maintien dans le réseau de communication (1), d'une instruction provenant du troisième domaine d'opérateur de réseau (20) de démarrage d'un commutateur de maintien du premier domaine d'opérateur de réseau (25) au deuxième domaine d'opérateur de réseau (25) ou vice versa, l'instruction étant reçue par le biais d'une plateforme de programmation par liaison radio (27) du premier ou du deuxième domaine d'opérateur de réseau (25), ou par le biais d'une connexion de protocole Internet utilisant une application de commande dans le terminal de communication (3),
tandis que, du point de vue des services, les premier et deuxième domaines d'opérateur de réseau sont des domaines esclaves et que le troisième domaine d'opérateur de réseau (20) est un domaine maître commandant les domaines esclaves (25), le troisième domaine d'opérateur de réseau (20) sachant sur quel domaine d'opérateur est actuellement maintenu le terminal de communication sans fil (3).

2. Procédé selon la revendication 1, dans lequel l'au moins un critère de commutation est au moins l'un des suivants : la panne du domaine d'opérateur, le dysfonctionnement du domaine d'opérateur, la redondance du domaine d'opérateur, l'interruption du service du domaine d'opérateur, l'emplacement physique donné du terminal de communication et l'instant donné.

3. Procédé selon la revendication 1 ou 2, le procédé comprenant en outre le classement, par le troisième domaine d'opérateur de réseau (20), d'une multiplicité de domaines d'opérateur de réseau du réseau de communication (1) par ordre de préférence.

4. Procédé selon l'une quelconque des revendications précédentes, dans lequel l'application de commande (17) du terminal de communication (3) reçoit (63) l'instruction du troisième domaine d'opérateur de réseau (20) d'exécuter le commutateur de maintien et demande (65) à un algorithme de traitement (9) du terminal de communication (3) de rester sur le premier ou sur le deuxième domaine d'opérateur de réseau (25).

5. Procédé selon l'une quelconque des revendications précédentes, dans lequel le premier domaine d'opérateur de réseau (25) et/ou le deuxième domaine d'opérateur de réseau (25) comprend/comprennent la plateforme de programmation par liaison radio (27) et dans lequel la plateforme de programmation par liaison radio (27) envoie (73), en réponse à l'instruction reçue d'un algorithme de réseau (23) à partir du troisième domaine d'opérateur de réseau (20), un message demandant à un algorithme de traitement (9) du terminal de communication (3) d'exécuter le commutateur de maintien.

6. Procédé selon l'une quelconque des revendications précédentes, dans lequel l'application de commande (17) du terminal de communication (3) détermine que le terminal de communication (3) doit initier un autre commutateur de maintien du premier domaine d'opérateur de réseau (25) au deuxième domaine d'opérateur de réseau (25), ou vice versa, et dans lequel l'application de commande (17) demande à l'algorithme de traitement (9) du terminal de communication (3) d'exécuter l'autre commutateur de maintien.

7. Procédé selon l'une quelconque des revendications précédentes, dans lequel le procédé comprend en outre, pour le troisième domaine d'opérateur de réseau (20) :
• la réception (81) d'une demande de radiomessagerie du deuxième domaine d'opérateur de réseau (25) en réponse à un appel entrant dans le deuxième domaine d'opérateur de réseau (25) destiné au terminal de communication (3) ; et
• le fait de demander (93), par le biais de la plateforme de programmation par liaison radio (27) du premier ou du deuxième domaine d'opérateur de réseau (25), ou par le biais d'une connexion de protocole Internet utilisant l'application de commande dans le terminal de communication (3), au terminal de communication (3) de rester sur le deuxième domaine d'opérateur de réseau (25).

8. Procédé selon la revendication 7, le procédé comprenant en outre, pour le troisième domaine d'opérateur de réseau (20) :
• la détermination (91) d'un emplacement actuel du terminal de communication (3) après réception de la demande de radiomessagerie ; et
• l'information (93) du terminal de communication (3) au sujet d'une fréquence de canal de diffusion du deuxième domaine d'opérateur de réseau (25) à l'emplacement actuel du terminal de communication (3).

9. Procédé selon l'une quelconque des revendications précédentes, le procédé comprenant en outre, pour le troisième domaine d'opérateur de réseau (20) :
• l'envoi (121) d'une demande d'emplacement et de fréquence au terminal de communication (3) pour déterminer un emplacement actuel du terminal de communication (3) et une première fréquence de canal de diffusion utilisée par le premier domaine d'opérateur de réseau (25) et/ou une seconde diffusion fréquence de canal utilisée par le deuxième domaine d'opérateur de réseau (25) à l'emplacement actuel du terminal de communication (3) ;
• la réception (127) d'un ensemble d'informations provenant du terminal de communication (3), l'ensemble d'informations comprenant l'emplacement actuel du terminal de communication (3) et la première fréquence de canal de diffusion et/ou la seconde fréquence de canal de diffusion ; et
• la production ou la mise à jour (129), en fonction de l'ensemble d'informations reçues, d'une carte de fréquences de réseau de canal de diffusion pour le réseau de communication (1).

10. Terminal de communication sans fil (3) permettant de communiquer dans un réseau de communication sans fil (1), le terminal de communication (3) comprenant au moins un premier instrument d'identité d'abonné (7), définissant un premier abonnement de domaine d'opérateur de réseau permettant d'accéder à un premier domaine d'opérateur de réseau (25), et un second instrument d'identité d'abonné (7), définissant un second abonnement de domaine d'opérateur de réseau, différent du premier abonnement de domaine d'opérateur de réseau, pour accéder à un deuxième domaine d'opérateur de réseau (25), un domaine d'opérateur de réseau respectif couvrant un domaine d'accès, un domaine de réseau et/ou un domaine de service, le domaine d'accès comprenant une infrastructure d'accès au réseau de communication d'un opérateur de réseau autorisé, le domaine de réseau comprenant une infrastructure de réseau central de l'opérateur de réseau autorisé et le domaine de service comprenant une infrastructure de réseau de service de l'opérateur autorisé de réseau, le terminal de communication (3) comprenant des moyens :
• de demande d'une première procédure de rattachement au domaine d'opérateur de réseau pour se rattacher au premier domaine d'opérateur de réseau (25) par activation du premier instrument d'identité d'abonné (7), la procédure de rattachement comprenant l'authentification et l'autorisation d'une première identité d'abonné du premier instrument d'identité d'abonné (7) au niveau du premier domaine d'opérateur de réseau (25) ;
• de demande d'une seconde procédure de rattachement au domaine d'opérateur de réseau pour se rattacher au deuxième domaine d'opérateur de réseau (25) par activation du second instrument d'identité d'abonné (7), la procédure de rattachement comprenant l'authentification et l'autorisation d'une seconde identité d'abonné du second instrument d'identité d'abonné (7) au niveau du deuxième domaine d'opérateur de réseau (25) ; et
• de maintien sur un seul des premier et deuxième domaines d'opérateur de réseau (25) à la fois pour communiquer dans le réseau de communication (1), le maintien comprenant l'écoute d'un canal de diffusion d'un domaine respectif d'opérateur de réseau,
tandis que, après les première et seconde procédures de rattachement au domaine d'opérateur de réseau, le terminal de communication (3) est agencé pour rester simultanément rattaché aux premier et deuxième domaines d'opérateur de réseau (25) tout en étant agencé pour fonctionner à une seule fréquence radio à la fois pour communiquer dans le réseau de communication (1), le terminal de communication sans fil (3) **se caractérisant en ce qu'**il comprend en outre des moyens :
• de réception, en réponse à la détection, par un domaine d'opérateur de superposition de réseau, d'un domaine appelé troisième domaine d'opérateur de réseau (20), du fait qu'au moins un critère de commutation de maintien a été rempli dans le réseau de communication (1), d'une instruction provenant du troisième domaine d'opérateur de réseau (20) de démarrage d'un commutateur de maintien du premier domaine d'opérateur de réseau (25) au deuxième domaine d'opérateur de réseau (25) ou vice versa, l'instruction étant reçue par le biais d'une plateforme de programmation par liaison radio (27) du premier ou deuxième domaine d'opérateur de réseau (25) ou par le biais d'une connexion de protocole Internet utilisant une application de commande dans le terminal de communication (3),
tandis que, du point de vue des services, les premier et deuxième domaines d'opérateur de réseau sont des domaines esclaves et que le troisième domaine d'opérateur de réseau (20) est un domaine maître commandant les domaines esclaves (25), le troisième domaine d'opérateur de réseau (20) sachant sur quel domaine d'opérateur est actuellement maintenu le terminal de communication sans fil (3).

11. Terminal de communication (3) selon la revendication 10, dans lequel le terminal de communication (3) est un terminal de communication à unité unique d'identité d'abonné (3) et dans lequel l'unité unique d'identité d'abonné (5) comprend le premier instrument d'identité d'abonné (7) et le second instrument d'identité d'abonné (7).

12. Terminal de communication (3) selon la revendication 11, dans lequel l'unité d'identité d'abonné (5) est une carte universelle à circuit intégré ou un module d'identité d'abonné incorporé et dans lequel le premier instrument d'identité d'abonné (7) comprend un premier module universel d'identité d'abonné et/ou un module d'identité de services multimédias de protocole Internet du premier domaine d'opérateur de réseau (25), tandis que le second instrument d'identité d'abonné (7) comprend un second module universel d'identité d'abonné et/ou un module d'identité de services multimédias de protocole Internet du deuxième domaine d'opérateur de réseau (25).
